# EUROPÄISCHE PATENTANMELDUNG

(11) **EP 2 713 117 A2**
(43) Veröffentlichungstag der Anmeldung: **02.04.2014**
(21) Anmeldenummer: 13183483.0
(22) Anmeldetag: 09.09.2013
(51) Int. Cl.: F24J 2/50, F24J 2/46

(54) **Solarkollektor mit Lochfolie**

(30) Priorität: 28.09.2012 DE 102012019164
(71) Anmelder: ROBERT BOSCH GMBH, 70442 Stuttgart (DE)
(72) Erfinder: Koehler, Max, 70374 Stuttgart (DE); Loehmann, Juergen, 73249 Wernau (DE)

(57) **Zusammenfassung**

Zur Verbesserung der optischen Einbindung von Solarkollektoren (1) in deren Peripherie, insbesondere als Wandmodul, schlägt die Erfindung einen Solarkollektor (1) vor, in dessen Gehäuse (2) ein Absorber (3) angeordnet ist, und dessen Gehäuse (2) von einer lichtdurchlässigen Abdeckscheibe (4) abgedeckt ist, wobei auf einer Seite (S1) der Abdeckscheibe (4) eine Lochfolie (10) mit Löchern (11) aufgebracht ist.

## Beschreibung

Die Erfindung betrifft einen Solarkollektor nach dem Oberbegriff des Patentanspruches 1. Aus dem Stand der Technik sind Solarkollektoren, insbesondere Flachkollektoren, zur Erwärmung eines Fluids mittels solarer Energie bekannt. Diese verfügen regelmäßig über ein Gehäuse mit einer lichtdurchlässigen Abdeckscheibe. Innerhalb des Gehäuses finden sich ein Absorber und ein Wärmetauscher, der über Zu- und Ableitungen mit zu erwärmendem Fluid gespeist wird. Solare Strahlung gelangt zunächst durch die Abdeckscheibe ins Innere des Gehäuses, wo sie dann absorbiert wird und das Fluid erwärmt.

Montiert werden Solarkollektoren überwiegend auf Dächern und wenig einsehbaren Aufstellungsorten. Dahingegen erfolgt der Einsatz im Bereich von Sichtflächen wie Fassadenwänden eher sporadisch und wenn der Platz auf der Dachfläche zu gering oder bereits mit Photovoltaik-Modulen belegt ist. Verantwortlich hierfür ist vor allem die Optik, da das Innenleben des Solarkollektors konstruktionsbedingt teilweise sichtbar ist und der Solarkollektor oftmals nicht harmonisch zur Umfeldgestaltung passt. Auch verschiedene Funktionsschichten auf der Abdeckscheibe, zum Beispiel zur selektiven Reflektion von Strahlung wie von DE 10 2008 038 794 A1 beschrieben, helfen hier nicht ab.

Ein weiterer Nachteil der bekannten Solarkollektoren sind auftretende temporäre Überhitzungen bei starker Sonneneinstrahlung. Diese können in ungünstigen Fällen den Solarkollektor beschädigen.

Aufgabe der Erfindung ist es, die Nachteile des Standes der Technik zu beseitigen, und einen Solarkollektor zu schaffen, welcher optisch ansprechend ist und sich harmonisch in variable Umfelder einbetten lässt. Der Solarkollektor soll eine hohe Effizienz aus Fluiderwärmung zu solarer Einstrahlung erzielen, gegen Überhitzung geschützt sowie qualitativ hochwertig und kostengünstig herstellbar sein.

Erfindungsgemäß wird dies mit den Merkmalen des Patentanspruches 1 gelöst. Vorteilhafte Weiterbildungen sind den Unteransprüchen zu entnehmen.

Die Erfindung betrifft einen Solarkollektor mit einem Gehäuse, einem im Gehäuse angeordneten Absorber und einer das Gehäuse abdeckenden lichtdurchlässigen Abdeckscheibe, bei dem auf mindestens einer Seite, insbesondere der Außenseite der Abdeckscheibe eine Lochfolie mit Löchern aufgebracht ist. Bei Ausbildung der Abdeckscheibe als Verbundglasscheibe kann die Lochfolie auch zwischen zwei Scheiben angeordnet sein.

Vorteilhaft an einer solchen Lochfolie ist, dass dem Betrachter ab einer gewissen Distanz eine durchgängig flächige Gestaltung suggeriert wird. Der Betrachter nimmt dann nur die Ebene der Lochfolie wahr, dahinter liegendes Innenleben des Solarkollektors bleibt ihm hingegen verborgen. Dennoch kann die kumulierte Lochfläche so groß gewählt werden, dass ausreichend viel Sonnenstrahlung durch die Abdeckscheibe ins Innere des Gehäuses gelangt. Durch vielfältige Gestaltungsmöglichkeiten der Folie lässt sich ein Standardkollektor zudem auf einfache Weise individuell an seine Peripherie anpassen. Weiterhin kann die Gefahr einer Überschreitung einer Grenztemperatur gemindert werden. Je nach Expositionslage des Solarkollektors kann nämlich ein entsprechender Lochanteil gewählt werden.

Es bietet sich an, die Lochfolie auf die Abdeckscheibe aufzukleben. Alternativ oder zusätzlich kann auch ein Laminierverfahren eingesetzt werden. Damit wird eine dauerhafte und vollflächige Verbindung zwischen der Lochfolie und der Abdeckscheibe geschaffen. Die Lebensdauer der Lochfolie ist so besonders hoch. Etwaiger Klebstoff sollte zunächst auf der Lochfolie aufgebracht sein, um Verunreinigungen auf der Abdeckscheibe im Bereich der Löcher bzw. eine Reinigung dieser Bereiche zu vermeiden.

In einer Weiterbildung der Erfindung ist vorgesehen, dass die Löcher einen Durchmesser von wenigstens 0,1 mm aufweisen. Derart kleine Löcher sind für den Betrachter selbst aus kurzer Distanz nicht wahrnehmbar. Die Fertigung der Lochfolie ist bei derartigen Lochdurchmessern zudem einfach und damit kostengünstig.

Bevorzugt haben die Löcher allerdings einen Durchmesser von höchstens 3 cm. Größere Löcher würden ansonsten auch bei mittleren bis größeren Blickdistanzen als solche wahrgenommen.

Um eine hohe Effizienz des Solarkollektors weiter aufrecht zu erhalten, sollte die kumulierte Fläche der Löcher wenigstens 20 % der Gesamtfläche der Lochfolie umfassen. Mit dem Lochanteil kann die Kollektortemperatur direkt beeinflusst bzw. gesteuert werden. Die Lochfolie sollte außerhalb der Löcher wenigstens schattierend sein. Vorzugsweise ist die Lochfolie jedoch gemäß einer erfindungsgemäßen Variante außerhalb der Löcher im Wesentlichen lichtundurchlässig. Auf diese Weise kann das Innenleben blickdicht für einen Betrachter verborgen werden. Außerdem wird der Solarkollektor wirksam vor einer Überschreitung einer Grenztemperatur, welche insbesondere durch die eingesetzten Werkstoffe bedingt ist, geschützt.

Eine besonders hohe Gestaltungsfreiheit ergibt sich bei einer Fortbildung der Erfindung, die vorsieht, dass die Lochfolie eingefärbt und/oder bedruckt ist. Die Folie kann hier farblich oder schwarz/weiß sowie unifarben oder mehrfarbig gestaltet werden. Damit ist ein hohes Maß an Variabilität zur Einbindung des Solarkollektors in die Umgebung gegeben. Ergänzend oder alternativ zu einer Folie können auch Siebdruckverfahren zur Anwendung kommen, um erfindungsgemäße Strukturen aufzubringen. In den meisten Anwendungsfällen bietet sich eine regelmäßige Anordnung der Löcher an, um eine homogen wirkende Fläche zu erzeugen. Zu einem hohen Maß an Variabilität und Gestaltungsfreiheit trägt allerdings auch eine Variante der Erfindung bei, bei welcher die Durchmesser und/oder die Anordnung der Löcher eine Graphik ausbilden. Diese kann je nach Bedarf vollflächig einfarbig und/oder mehrfarbig und/oder als bunte Graphik gestaltet sein. Dem Betrachter kann so ein Muster oder ein Logo visualisiert werden, das sich gegebenenfalls über mehrere benachbarte Solarkollektoren erstreckt. Interessant sind hier unter anderem Firmennamen/-logos, Markenzeichen und für den Umweltschutz oder für regenerative Energien relevante und/oder Zeichen. Mithin stehen die von Solarkollektoren besetzten Flächen dadurch auch für Werbezwecke und ähnliches zur Verfügung.

Eine Effizienzsteigerung des erfindungsgemäßen Solarkollektors ist durch eine Weiterentwicklung des Solarkollektors erzielbar, bei der wenigstens im Bereich der Löcher eine selektiv reflektierende Beschichtung zwischen der Lochfolie und dem Absorber angeordnet ist. Derartige selektiv reflektierende Beschichtungen können vom Absorber emittierte Wärmestrahlung reflektieren und damit im Kollektorgehäuse halten. Trotzdem lassen sie die solare Strahlung aus der Umgebung zum Absorber passieren.

Es bietet sich an, die selektiv reflektierende Beschichtung auf der Abdeckscheibe aufzubringen. Dies erspart das Vorsehen eines weiteren kostenintensiven und Effizienz mindernden Trägerelements für die Beschichtung. Bevorzugt wird die selektiv reflektierende Beschichtung auf der Außenseite der Abdeckscheibe aufgebracht. Dafür spricht auch, dass sich die Beschichtung bei eventuellen Beschädigungen oder auch gestalterischen Änderungswünschen im Laufe der Lebensdauer in Einbaulage entfernen und erneuern lässt.

Besonders gute Effizienzwerte werden mit selektiv reflektierenden Beschichtungen erzielt, die als Mikrostruktur-Gitter ausgebildet sind. Ein solches Mikrostruktur-Gitter kann aus transparent leitfähigem Oxid [TCO] bestehen. Die Herstellung eines Mikrostruktur-Gitters aus transparent leitfähigem Oxid [TCO] ist verhältnismäßig wirtschaftlich realisierbar. Zur Erzielung der gewünschten Strahlungsselektion sollten die Stegabstände des Mikrostruktur-Gitters zwischen 1 und 3 Mikrometern betragen. Die Stegbreiten des Mikrostruktur-Gitters betragen bevorzugt zwischen 0,2 und 0,8 Mikrometern.

Gemäß einer anderen Variante der Erfindung wird die Effizienz des Solarkollektors dadurch gesteigert, dass im Bereich außerhalb der Löcher eine reflektierende Beschichtung zwischen der Lochfolie und dem Absorber angeordnet ist. Sofern die Folie schon verhältnismäßig impermeabel für solare Strahlung ist, reicht im Bereich hinter der Folie eine Reflektion der Wärmestrahlung und der solaren Strahlung aus, um eine Effizienzsteigerung zu bewirken. Die Beschichtung muss hier keine Selektion verschiedener Strahlungen vornehmen. Hierdurch ist diese Beschichtung verhältnismäßig preiswert.

In einer zu bevorzugenden näheren Ausgestaltung ist die reflektierende Beschichtung zwischen der Lochfolie und der Abdeckscheibe angeordnet. Die Positionierung der Löcher der Beschichtung und die der Folie liegen somit auch bei nicht lotrechter Einstrahlung von solarer Strahlung hintereinander, was insbesondere bei kleineren Lochdurchmessern vorteilhaft ist.

Besonders kostengünstig, einfach fertigbar und nachrüstbar ist eine Fortentwicklung, bei der die reflektierende Beschichtung auf der Lochfolie aufgebracht ist. Hierdurch muss die Folie inklusive der Beschichtung nur noch auf die Abdeckscheibe aufgebracht werden. Zudem sind die Löcher der Beschichtung und die der Folie stets korrekt zueinander positioniert.

Aufgrund der hohen Gestaltungsvariabilität ist der Solarkollektor bevorzugt als Wandmodul ausgelegt. Diese zeichnen sich insbesondere durch rückseitig angeordnete Aufhängemittel aus. Außerdem sollte sich die Abdeckscheibe bis zu einem schmalen Rand des Gehäuses erstrecken oder sogar bis zum Außenumfang des Gehäuses geführt sein, um keinen optischen Bruch zwischen benachbarten Solarkollektoren zu erzeugen.

Die Zeichnungen stellen Ausführungsbeispiele der Erfindung dar und zeigen in
- Fig. 1: eine Draufsicht auf einen Solarkollektor mit Lochfolie,
- Fig. 2: einen Schnitt durch einen Teilabschnitt eines Solarkollektors mit Lochfolie auf der Außenseite einer Abdeckscheibe und mit einem rohrförmige Fluidkanäle aufweisenden Absorber,
- Fig. 3: einen Schnitt durch einen Teilabschnitt eines Solarkollektors mit Lochfolie auf der Außenseite einer Abdeckscheibe und mit einem flächigen Absorber, und
- Fig. 4: einen Schnitt durch einen Teilabschnitt eines Solarkollektors mit einer in eine Verbundglasscheibe integrierten Lochfolie und mit einem flächigen Absorber.

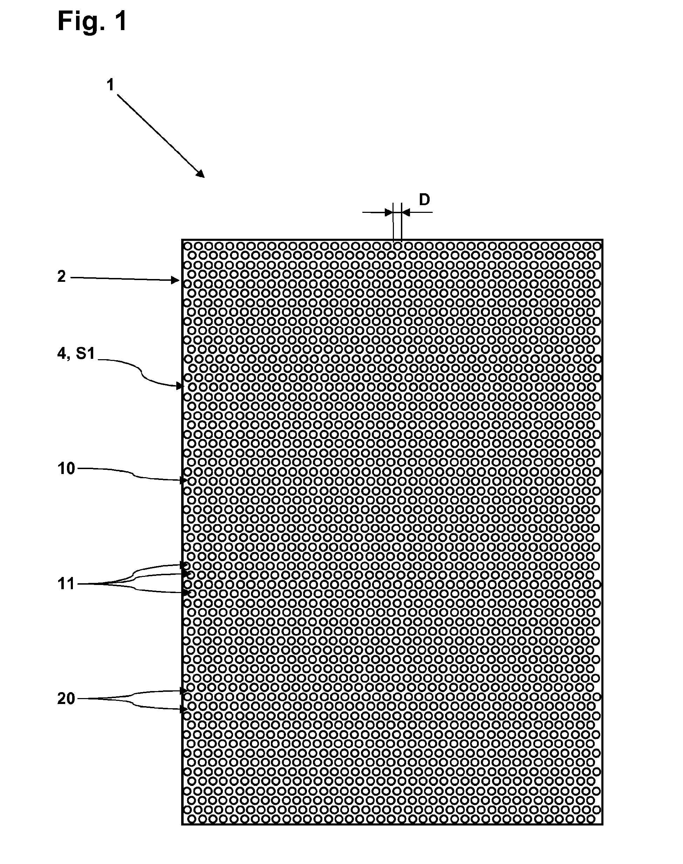

Fig. 1 zeigt eine Draufsicht aus der Vogelperspektive auf einen Solarkollektor 1 mit einer Lochfolie 10. Der Solarkollektor 1 hat ein Gehäuse 2, das von einer lichtdurchlässigen Abdeckscheibe 4 abgedeckt ist. Auf der Außenseite S1 der Abdeckscheibe 4 ist eine Lochfolie 10 mit Löchern 11 aufgebracht, welche einen einheitlichen Lochdurchmesser D haben. Man erkennt zudem, dass die Löcher 11 regelmäßig angeordnet sind. Die kumulierte Fläche der Löcher 11 umfasst mehr als 20 % der Gesamtfläche der Lochfolie 10.

Im Bereich der Löcher 11 ist eine selektiv reflektierende Beschichtung 20 hinter der Lochfolie 10 angeordnet, insbesondere zwischen der Lochfolie 10 und der Abdeckscheibe 4. Zunächst wurde hierfür die selektiv reflektierende Beschichtung 20 auf die Außenseite S1 der Abdeckscheibe 4 aufgebracht und anschließend mit der Lochfolie 10 überklebt.

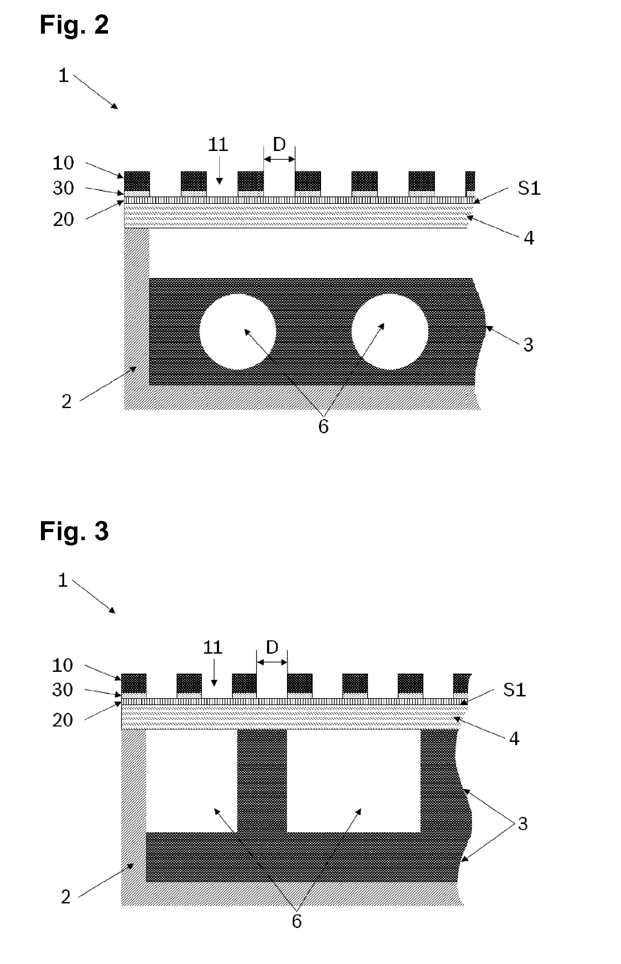

In Fig. 2 ist ein Schnitt durch einen Teilabschnitt eines Solarkollektors 1 mit einer Lochfolie 10 dargestellt. Man erkennt zunächst einen Rahmenschenkel eines Gehäuses 2 des Solarkollektors 1. Innerhalb des Gehäuses 2 ist ein Absorber 3 angeordnet, der einteilig als Wärmetauscher ausgebildet ist. Der Wärmetauscher verfügt über sich hinter der Oberfläche des Absorbers 3 erstreckende rohrförmige Fluidkanäle 6.

Beabstandet zum Absorber 3 wird das Gehäuse 2 von einer lichtdurchlässigen Abdeckscheibe 4 abgedeckt. Die Abdeckscheibe 4 erstreckt sich bis an den Außenumfang des Gehäuses 2. Daher sind Solarkollektoren 1 dieser Bauart bestens als Wandmodule geeignet, welche sich durch eine harmonische Gesamtoberfläche auszeichnen.

Auf der Außenseite S1 der Abdeckscheibe 4 ist eine Lochfolie 10 mit regelmäßig angeordneten Löchern 11 aufgebracht, welche vor der Aufbringung zunächst auf Ihrer Rückseite mit einer reflektierenden Schicht 20 ausgestattet wurde. Die Löcher 11 erstrecken sich durch die eigentliche Lochfolie 10 und die reflektierende Beschichtung 20. Weiterhin haben sie einen einheitlichen Durchmesser D. Außerhalb der Löcher 11 ist die Lochfolie 10 lichtundurchlässig.

Ferner ist eine selektiv reflektierende Beschichtung 20 zwischen der Lochfolie 10 und dem Absorber 3 angeordnet. Diese wurde vor der Aufbringung der Lochfolie 10 zunächst vollflächige auf der Außenseite S1 der Abdeckscheibe 4 aufgebracht und ist als Mikrostruktur-Gitter aus transparent leitfähigem Oxid [TCO] ausgebildet.

Fig. 3 zeigt einen Schnitt durch einen Teilabschnitt eines Solarkollektors 1, ebenfalls mit einer Lochfolie 10 auf der Außenseite einer Abdeckscheibe 4. Allerdings ist hierbei ein flächiger Absorber 3 vorgesehen, welcher flache, relativ großflächige Fluidkanäle 6 aufweist. Diese Fluidkanäle 6 können lokal unterschiedlich gestaltet sein und es sind mäanderförmige oder harfenartige Anordnungen in Bezug auf die gesamte Absorberfläche denkbar. Auch ein vollflächiges Durchströmen mit Einbauelementen zur Strömungslenkung ist denkbar.

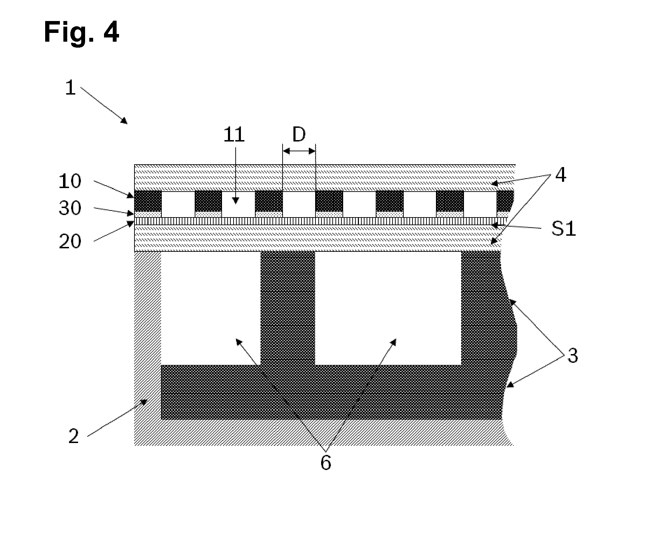

In Fig. 4 ist ein Schnitt durch einen Teilabschnitt eines Solarkollektors 1 mit einer in eine Verbundglasscheibe integrierten Lochfolie10 und mit einem flächigen Absorber 3 mit einer Gestaltung der Fluidkanäle 6 gemäß Fig. 3 dargestellt. Die Lochfolie 10 sowie die entsprechend abgestimmten Beschichtungen 20, 30 befinden sich zwischen einer Abdeckscheibe 4 und einer weiteren Scheibe der Verbundglasscheibe. Damit sind die Lochfolie 10 sowie die Beschichtungen 20, 30 vor Umwelteinflüssen, insbesondere vor mechanischen Einflüssen und Korrosion, geschützt.

**Bezugszeichenliste**

| | | | |
|---|---|---|---|
| 1 | Solarkollektor | 20 | selektiv reflektierende Beschichtung |
| 2 | Gehäuse | | |
| 3 | Absorber | 30 | reflektierende Beschichtung |
| 4 | Abdeckscheibe | | |
| 6 | Fluidkanal | D | Durchmesser |
| | | S1 | Außenseite |
| 10 | Lochfolie | | |
| 11 | Löcher | | |

## Patentansprüche

1. Solarkollektor (1) mit einem Gehäuse (2), einem im Gehäuse (2) angeordneten Absorber (3) und einer das Gehäuse (2) abdeckenden lichtdurchlässigen Abdeckscheibe (4),
**dadurch gekennzeichnet, dass** auf mindestens einer Seite der Abdeckscheibe (4) eine Lochfolie (10) mit Löchern (11) aufgebracht ist.

2. Solarkollektor (1) nach Anspruch 1,
**dadurch gekennzeichnet, dass** auf der Außenseite (S1) der Abdeckscheibe (4) eine Lochfolie (10) mit Löchern (11) aufgebracht ist.

3. Solarkollektor (1) nach Anspruch 1 oder 2,
**dadurch gekennzeichnet, dass** die Lochfolie (10) mit Löchern (11) bei Ausbildung der Abdeckscheibe (4) als Verbundglasscheibe zwischen zwei Scheiben angeordnet ist.

4. Solarkollektor (1) nach einem der vorhergehenden Ansprüche,
**dadurch gekennzeichnet, dass** die Löcher (11) einen Durchmesser (D) von wenigstens 0,1 mm aufweisen.

5. Solarkollektor (1) nach einem der vorhergehenden Ansprüche,
**dadurch gekennzeichnet, dass** die Lochfolie (10) außerhalb der Löcher (11) im Wesentlichen lichtundurchlässig ist.

6. Solarkollektor (1) nach einem der vorhergehenden Ansprüche,
**dadurch gekennzeichnet, dass** die Lochfolie (10) eingefärbt und/oder bedruckt ist.

7. Solarkollektor (1) nach einem der vorhergehenden Ansprüche,
**dadurch gekennzeichnet, dass** die Durchmesser (D) und/oder die Anordnung der Löcher (11) eine Graphik ausbilden, wobei diese vollflächig einfarbig und/oder mehrfarbig und/oder als bunte Graphik gestaltet sind.

8. Solarkollektor (1) nach einem der vorhergehenden Ansprüche,
**dadurch gekennzeichnet, dass** wenigstens im Bereich der Löcher (11) eine selektiv reflektierende Beschichtung (20) zwischen der Lochfolie (10) und dem Absorber (3) angeordnet ist.

9. Solarkollektor (1) nach einem der vorhergehenden Ansprüche,
**dadurch gekennzeichnet, dass** im Bereich außerhalb der Löcher (11) eine reflektierende Beschichtung (30) zwischen der Lochfolie (10) und dem Absorber (3) angeordnet ist.

10. Solarkollektor (1) nach Anspruch 7,
**dadurch gekennzeichnet, dass** die reflektierende Beschichtung (30) zwischen der Lochfolie (10) und der Abdeckscheibe (4) angeordnet ist.

11. Solarkollektor (1) nach einem der Ansprüche 7 oder 8,
**dadurch gekennzeichnet, dass** die reflektierende Beschichtung (30) auf der Lochfolie (10) aufgebracht ist.
